# EUROPEAN PATENT SPECIFICATION

(11) **EP 0 372 420 B1**
(45) Date of publication and mention of the grant of the patent: **20.09.1995**
(21) Application number: 89122218.4
(22) Date of filing: 01.12.1989
(51) Int. Cl.: G11B 5/39, G11B 5/127

(54) **Magnetic recording-reproducing apparatus and magnetoresistive head for use therewith**
Magnetisches Aufzeichnungs- und Abspielgerät sowie magnetoresistiver Kopf zum Einsatz darin
Appareil d'enregistrement et de reproduction magnétique et tête magnétorésistive à cet usage

(30) Priority: 02.12.1988 JP 304105/88; 21.08.1989 JP 213093/89
(43) Date of publication of application: 13.06.1990
(73) Proprietor: HITACHI, LTD., Chiyoda-ku, Tokyo 100 (JP)
(72) Inventor: Tanabe, Hideo, Higashimurayama-shi (JP); Kitada, Masahiro, Nishitama-gun Tokyo (JP); Shimizu, Noboru, Tokorozawa-shi (JP); Nakamura, Hitoshi, Hachioji-shi (JP)
(74) Representative: Strehl Schübel-Hopf Groening & Partner

(56) References cited:
- EP-A- 0 081 240
- GB-A- 2 021 843
- US-A- 4 356 523
- US-A- 4 413 296
- COMPUTER TECHNOLOGY REVIEW. vol. VIII, no. 1, January 1988, LOS ANGELES US pages 22 - 24; Carl E. Wirtanen: "Thin-film heads meet disk demand now, magneto-resistive technology up next"

## Description

The present invention relates to magnetic recording-reproducing apparatus used in auxiliary storage of computers, and magnetic heads for use therewith, and more particularly to superhigh recording density magnetic recording-reproducing apparatus and magnetic heads suitable for magnetic recording and reproduction with a narrow recording track.

For example, magnetic discs of current commercially available magnetic recording-reproducing apparatus have a linear recording density of about 10 kb/cm (25 KBPI), a track density of about 600 cm⁻¹(1.5 KTPI) and an area recording density of about 5.5 Mb/cm² (35 Mb/in²). The magnetic heads used for these magnetic discs are inductive thin film heads. One such head records and reproduces an information signal. As the recording density increases further in the future, however, it is difficult for a single inductive thin film head to sufficiently record data and to sufficiently reproduce the recording data from a standpoint of a head structure. Thus, it seems that the use of a composite magnetic head which separately includes a recording magnetic head and a reproducing magnetic head will be required in the magnetic recording-reproducing apparatus in the future.

Known conventional composite magnetic heads use the reproducing head of a magnetoresistive (MR) type using a soft-magnetic thin film magnetoresistive effect, as disclosed in Japanese Patent Publication JP-A-51-44917. Other conventional MR heads are ones where the direction of a sense current which flows through the MR element and the direction of the signal magnetic field from a medium are normal to each other, as disclosed, for example, in IEEE, Trans. Magnetics, HAG-7, No. 1 (1971) pp. 150 - 154. Japanese Laid-Open Patent Publication (JP-A)50-65211 discloses an MR head of the type which includes two juxtaposed such MR elements with bias magnetic fields which are gnerated from current magnetic fields produced by currents flowing through both the MR elements and differentially amplify the output voltages from both the MR elements. Japanese Laid-Open Patent Publication (JP-A)-52-14381 discloses an MR head where the direction of the sense current flowing through the MR element and the direction of the signal magnetic field from a medium are parallel and electrodes are formed on a medium facing surface and an opposite surface of the MR film. Japanese Laid-Open Patent Publications (JP-A)61-182620 and 62-234218 disclose an MR head where the direction of the sense current flowing through an MR element and the direction of the signal magnetic field from a medium are parallel and where two MR films are connected electrically in parallel to use magnetic fields produced by currents flowing through both the MR films in the same direction to form a single magnetic domain in the MR films, and to reduce Barkhausen noise.

As described above, if the recording density in the magnetic recording reproducing apparatus increases further in the future, a composite magnetic head which includes separate magnetic heads for recording and reproduction only will be required. Even if the conventional composite magnetic head disclosed in Japanese Patent Publication JP-A-51-44917 uses the above described conventional MR head techniques, these techniques have the following problems. Thus, it cannot realize superhigh recording density magnetic recording-reproducing apparatus which provides an area recording density of 50 Mb/cm² (300 Mb/in²) or more.

The differential amplification type MR head disclosed in the above Publication JP-A-50-65211 is influenced by a signal magnetic field from the adjacent track because the medium facing edge of the MR film is considerably large in width compared to the track to thereby increase noise. Since it takes different times for the two superimposed MR films to absorb the signal magnetic fields, the output waveform obtained by differentially amplifying the outputs from the MR elements is greatly distorted disadvantageously. The MR heads disclosed in Japanese Patent Publications JP-A-61-182620 and 62-234218 have MR films which are connected electrically in parallel with electrodes being provided on the medium facing surface side of the MR film which is most sensitive to the signal magnetic field, so that the intensity of the resulting output signal corresponding to the signal magnetic field is low or noise due to temperature fluctuations cannot be removed. Thus, the signal to noise ratio is reduced further as the track width becomes narrower.

GB-A-2 021 843 discloses a magnetic head with the features included in the first part of claim 1. In the known structure, the MR element is disposed in one plane and has its active portion extending parallel to the surface of the recording medium. This results in an overall width of the sensing portion of the recording head which makes it unsuitable for narrow recording tracks.

US-A-4 356 523 discloses a magnetic head with a pair of MR films superimposed upon each other and interconnected at both end portions. No differential measurement is made.

### SUMMARY OF THE INVENTION

It is an object of the present invention to provide a magnetic head suitable for super-high density recording media.

This object is met by the magnetic head characterised in claim 1.

The multilayered MR film structure employed in accordance with the invention permits achieving a linear recording density of 30 kb/cm (75 kbpi) or more and a track density of 1600 cm⁻¹ (4 ktpi) or more.

The voltage generated across the electrodes provided on the surfaces of the superimposed MR films facing the medium and on the opposite sides of the MR films are differentially amplified. Thus, modulation noise due to fluctuations in the ambient temperature is cancelled, and the intensity of the output signal is increased compared to a magnetic head using a single MR film. At least two inner films of the multilayered MR element are coupled magnetically and electrically on the side of the medium facing surface of the head to thereby eliminate the difference between the times when the signal magnetic field from the medium is absorbed by the combined MR films. Thus, even if the voltages indicative of the signal magnetic field generated across the respective electrodes on the MR films are differentially amplified, the waveform of the output signal from the differential amplifier is not distorted. A current lead provided between the MR films provides a magnetic field generated by a current flowing through the current lead and acts so as to bias by any quantity in opposite directions the directions of magnetization in the MR films positioned above and below the current lead. Thus, even if the voltage generated across the MR film electrodes are amplified differentially, any intensity of a signal output higher than that obtained with a head using a single MR film is withdrawn without cancelling the voltages.

In the present invention, at least two inner films of the multilayered MR element are connected magnetically and electrically on the side of the medium facing surface of the head. Electrodes are provided on the MR films opposite to the medium facing sides of the respective combined MR films such that a sense current flows across the electrodes to provide an output signal. Thus, the overall resistance between the electrodes is the sum of the respective resistances of the MR films since the respective MR films are connected in series. Therefore, if the currents flowing the MR films are arranged so as to be the same, the voltage across the electrodes is twice as high as that generated by a head using a single MR film, and hence the intensity of the output signal corresponding to the signal magnetic field applied to the head is twice as high as that obtained by the head using the single MR layer.

In the present invention, the MR films which produces a positive and a negative Δρ effect are arranged in series, so that the differential effect is realized although two terminals are used. Thus, wiring is easy also in narrow tracks.

### BRIEF DESCRIPTION OF THE DRAWINGS

FIG. 1 is a cross-sectional perspective view of a magnetic head according to the present invention;
FIG. 2 schematically illustrates a magnetic disc storage device according to the present invention;
FIG. 3 is a cross-sectional perspective view of a magnetic head according to another embodiment of the present invention;
FIG. 4 is a cross-sectional perspective view of a magnetic head according to a further embodiment of the present invention;
FIG. 5 is a cross-sectional perspective view of a magnetic head according to a further embodiment of the present invention;
FIG. 6 is a cross-sectional perspective view of a magnetic head according to a still further embodiment of the present invention;
FIGs. 7a and 7b are a front view and a cross-sectional view, respectively, of a magnetoresistive effect device of one embodiment of the present invention;
FIGs. 8a and 8b illustrate the operational principle of the embodiment of the present invention;
FIGs. 9a and 9b are a front view and a cross-sectional view, respectively, of a head of another embodiment of the present invention;
FIG. 10 is a cross section view of a head of still another embodiment of the present invention.
FIG. 11a is a plan view of a magentoresistive effect device of one embodiment of the present invention;
FIG. 11b is a cross-sectional view taken along the line A-A of FIG. 11a;
FIGs. 12a, 12b and 12c illustrate the operation of the magnetoresistive effect device of the embodiment;
FIG. 13a is a plan view of the magnetoresistive effect device of the embodiment;
FIG. 13b is a cross section view taken along the line B-B of FIG. 13a; and
FIG. 14 is a perspective view of one embodiment of a magnetoresistive effect device according to the present invention.

### DETAILED DESCRIPTION OF THE PREFERRED EMBODIMENTS

### Example 1

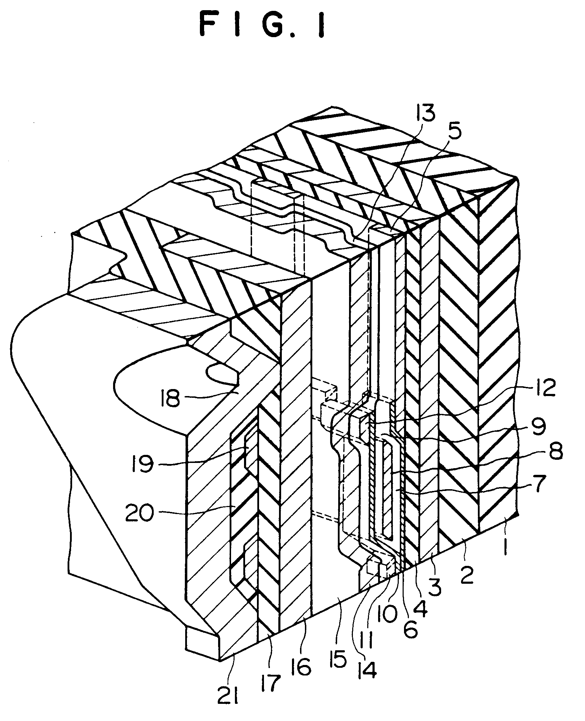

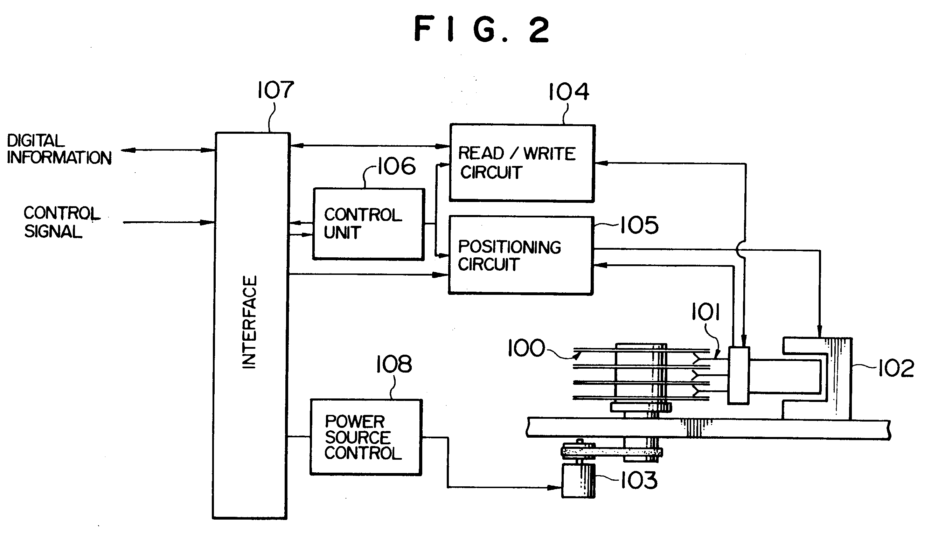

FIG. 2 schematically illustrates a magnetic disc storage system having a recording density of 300 Mb/in² or more as a first embodiment of the present invention. The main mechanism includes a recording medium 100, a magnetic head 101, an actuator 102 and a spindle motor 103. Magnetic head 101 is connected via an interface 107 to a read-write circuit 104, a positioning circuit 105 and a control circuit 106. Digital information and a control signal are input to the disc storage device via interface 107. In the particular embodiment, the linear recording density is 30 kb/cm (75 kBPI) (the bit length is 0.43 µm), and the track density is 1600 cm⁻¹ (4 kTPI) (the track width is 4 µm). Recording medium 100 includes a Co sputted medium of a coercivity of 2000 oerstead or more. Magnetic head 101 includes of a composite type having separate recording and reproducing functions which will be described in more detail later with reference to FIG. 1. Actuator 102 is controlled by positioning circuit 105 with a positioning accuracy of 0.5 µm. The spacing between recording medium 100 and magnetic head 101 is 0.1 - 0.15 µm. The rotation of spindle motor 103 is controlled by power source control circuit 108 so as to drive a disc-like medium.

The magnetic head which is the main portion of the present invention will now be described. FIG. 1 is a cross-sectional perspective view of the magnetic head. The head is a recording-reproducing spearation type head which includes a reproducing section-recording section superimposed on a substrate in which a differential MR head of two layered MR elements is used for reproduction and in which an inductive head is used for recording. The reproducing track and recording track are 3 µm and 4 µm, respectively, in width. In order that the reproducing head has a sufficient resolution, the spacing between the shielding layers is required to be at least a minimum bit period or less. As shown below, in the particular embodiment, the spacing between the shielding layers is 0.68 µm, which corresponds to a bit period of about 40 kb/cm (100 kBPI).

A method of preparing such head will now be described in detail. Deposited on a non-magnetic substrate 1, for example, of ceramics is an insulator 2 such as alumina or silica, which is in turn covered with a lower magnetic shield layer 3 of a soft magnetic film. A substrate of a soft magnetic material such as ferrite may be used which also functions as a lower magnetic shield. Formed on magnetic shield layer 3 is an insulator film 4 having a thickness of 0.1 - 0.4 µm using sputtering. While alumina or silica may be used as the insualting layer, alumina was used as the materials of the insulator layers of all the embodiments of the present invention to be described later. The spacing between the shield layer and MR elements formed later is determined by the thickness of the insulator. as described above, the spacing influences the resolution of the recording and reproducing characteristic, so that it must be selected depending on the recording density of the head. In the particular embodiment the thickness of the insulator was 0.2 µm.

Next, a conductor 5 as an electrode terminal for a first MR element is formed. The material of the conductor 5 may be made of a material of high conductivity such as Al or Cu. In the particular embodiment, all the conductors and conductive layers to be described later was Cu. The thickness of the conductor is 0.3 µm and the pattern of the conductor 5 was formed by regular photolithographic techniques.

Formed on the conductive pattern is an MR film of Ni-Fe alloy or Ni-Co alloy so as to be 10 - 100 nm using evaporation or sputtering. Then photoetching was used to form a first MR element 6 having a predetermined shape. The first MR element was 3 µm broad and three times as long as the track width to reduce the influence of a demagnetizing field. The thickness of the MR film also influences the demagnetizing field. If the demagnetizing field is strong, the dynamic range of the magnetic field of an input signal is expanded, but the head sensitivity is reduced. In the particular embodiment, the magnitude of the residual magnetization in a medium used and the head sensitivity are considered so that the film thickness of the MR element is set to 40 nm. The magnetic-easy direction of the MR film was set so as to be across the track.

Subsequently, an insulator film 7 and then a conductor pattern 8 were formed and an insulator layer 9 was deposited. The insualtor layers 7, 9 and conductor layer 8 each were 0.2 µm thick. The insualtor layer on an end of the MR element on the medium facing side of the head was etched away to form a through hole to thereby expose a portion of the first MR element. An MR film was then deposited and worked on the same conditions as the previous MR element to form a second MR element 10 which was connected with the first MR element at the through hole. What is important in this process is that the first and second MR elements 6 and 10 are securedly connected at one end electrically and magnetically and that both the elements have the same characteristics. While in the particular embodiment the two RM elements are directly connected at one end, the elements may be connected via a soft magnetic film provided therebetween.

A 0.2-µm thick electrode film was then deposited and worked to form electrode patterns 11 and 12 at the corresponding ends of the second MR element. Subsequently, a 0.2-µm insulator film 13 was desposited, and, as an upper magnetic shield layer 14, a 1-µm Ni-Fe alloy soft magnetic film was deposited.

A 3-µm insulator film 15 was then deposited, the surface of which was then flattened using etch-back method. A 3-µm Co amorphous soft magnetic film was deposited as a lower magnetic pole 16 for the recording head under a saturated magnetic flux density of 1.5 Teslas. Regular photoetching was then conducted to form the magnetic pole 16 of a predetermined shape. The track width of the lower magnetic pole was 4.5 µm. Deposited as a gap layer between the recording magnetic poles was a 2-µm insulator film 17. A through hole 18 was then formed in the back contact section. Thereafter, a coil pattern 19 was formed in a 2-µm thick conductive layer. Subsequently, a flat resin layer 20 and then an upper magnetic pole 21 were formed on conditions similar to those for the lower magnetic pole. The width of a track in the upper pole was 4 µm. Thus the magnetic head of the particular embodiment resulted.

In the reproduction section of the particular embodiment, the sense currents flowing through the two-MR elements have the same direction, so that the MR elements are magnetized in opposite directions of track traverse due to magnetic fields formed by the currents. Therefore, magnetostatic coupling is effected between the MR elements to thereby establish a stabilized magnetic structure. By causing a current to flow through conductor 8 provided between the elements to generate magnetic fields to thereby magnetize the elements in opposite directions perpendicular to the width of the tracks. Therefore, by properly selecting the magnitudes of currents flowing through the conductor and MR elements, the respective elements can have the directions of their magnetization at an angle of about 45 degrees to the direction of track traverse to thereby improve the linearity and sensitivity of the output while a stable magnetic domain structure is being maintained.

The signal flux entering the magnetic electrical junction of the element ends diverges into the MR elements and the magnetization is rotated such that the resistance to the flux in one element increases while the resistance to the flux in the other element decreases. Therefore, the outputs from electrodes provided at the leading and trailing ends of the elements can be amplified differentially, and the resulting output is twice as high as the output from a single MR element. The differential amplification serves to eliminate part of modulation noise, for example, due to temperature fluctuations. The linearity of the output in response to the input magnetic field is improved to thereby expand the dynamic range.

Examination of the characteristics of the device of the particular embodiment having the conditions mentioned above, using the above mentioned magnetic head having a 4-µm track width and a 1600 cm⁻¹ (4 KTPI) track density, clarified that the S/N ratio was 2.8 in a band of 72 MHz corresponding to a lienar recording density of 30 kb/cm (75 KBPI) and the resolution was 60%, and the overwrite characteristic was 25 dB or more. In order to record and reproduce an information signal at an error rate of 10⁻¹⁶ or less in a magnetic disc device, the device must provide an S/N of 2.5 or more, a resolution of 50% or more and an overwrite characteristic of 23 dB or more in the signal band used in the device corresponding to the recording density of the device. The above measured values all satisfy these requirements. Therefore, by using the device of the particular embodiment, it will be seen that the device provides a recording density of 50 Mb/cm² (300 Mb/in²).

### Embodiment 2

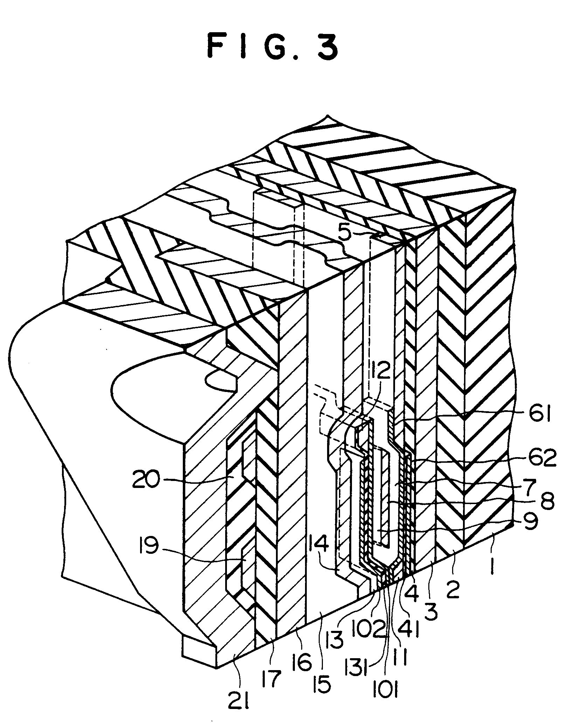

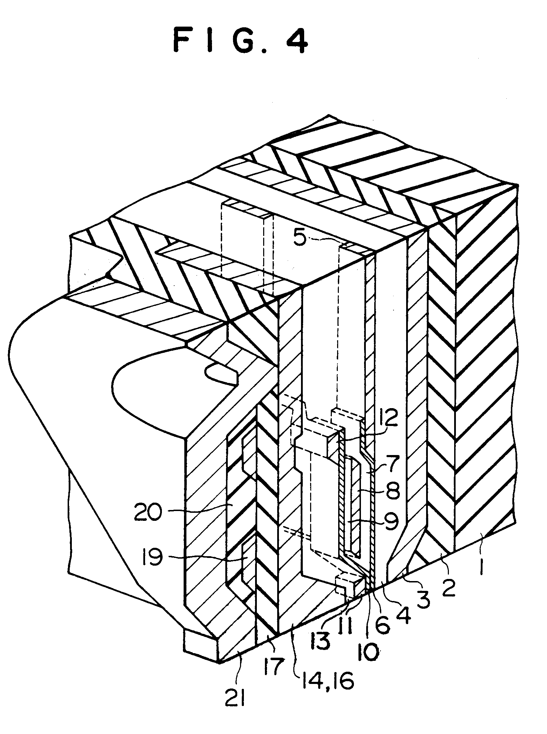

A second and a third embodiment of the present invention will now be described with reference to FIGs. 3 and 4, respectively. Both the embodiments differ mainly from the recording and reproducing device of the first embodiment with respect to the reproducing section of the magnetic head, so that both the magnetic heads of the embodiments are shown in cross sectional perspective view. FIG. 3 illustrates the head of two MR films one including a pair of two MR films 61 and 62 and insulator layer 41 therebetween and the other including a pair of two MR films 101 and 102 and insulator layer 131 therebetween where the inner MR films 61, 101 are connected at one end such that electrode terminals 5, 11 and 12 supply electric currents to the MR films. The outer MR films 62, 102 are magnetized by magnetic fields produced by the sense currents flowing through the inner MR films to thereby apply to the inner MR films bias magnetic fields having directions of track traverse. Therefore, the directions of magnetization of the inner MR films are stabilized to thereby prevent the generation of an unstable magnetic domain structure which would otherwise generate Barkhausen noise. In order to enhance the effect of the two-layered MR device, the insulator layers are preferably thin, but were selected to be 50 nm thick from a standpoint of electrical insualtion. The shape of the MR element is similar to that of the first embodiment. As in the first embodiment, the currents flowing through the first and second MR elements apply bias magnetic fields similar to those in the first embodiment to thereby stabilize the magnetic domain structure. Since the spacing between the adjacent MR films of the particular embodiment is narrow compared with the first embodiment, the magnetic domain structure is stabilized more efficiently. While in the particular embodiment the outer film 62, 102 are only required to be a soft magnetic film, so that they may be another appropriate material.

As described above, as the particular embodiment serves to stabilize the magnetic domain structure efficiently by employing the two-layered MR device to thereby ensure the suppression of Barkhausen noise.

### Embodiment 3

A third embodiment of FIG. 4 is intended to reduce a stray field entering from the MR films to a shield layer. The distance between the shield layer and the MR films was selected to be large except in the vicinity of the medium facing surface of the device. The head was fabricated as follows. First, a 2-µm deep recess was formed having a tapered side in a substrate side and a shield layer 3 was then formed. An insualtor layer 4 was then deposited so as to be 3 µm or more thick and flattened using etch-back method. Subsequently, like the first embodiment, two MR films 6 and 10 and a conductor 8 were formed. The shape of the MR films were similar to those of the first embodiment. An insulator layer 15 was then deposited so as to be 2 µm or more thick and then the insulator layer was removed at an end of the device on the medium facing side. Thereafter, an insualtor film 151 was deposited over so as to be 0.2 µm thick and a soft magnetic film functioning as shield layer 14 and lower magnetic pole 16 was formed on the insualtor film 151. In the particular embodiment, Co amorphous alloy was employed as the soft magnetic film. subsequently, in order to flatten the surface of the magnetic film, etch-back method was used. In consideration of a decrease in the film thickness due to etch-back, the thickness of the magnetic film was set to 4 µm. Thereafter, insulator layer 17, coil 19, flattened layer 20, and upper magnetic pole 21 were formed to constitute the recording head section on the same conditions as those mentioned above.

The reproduced output from the such head increased by about 30% compared to the first embodiment. Thus, the S/N ratio was improved and the formation of narrow tracks was effected successfully.

### Embodiment 4

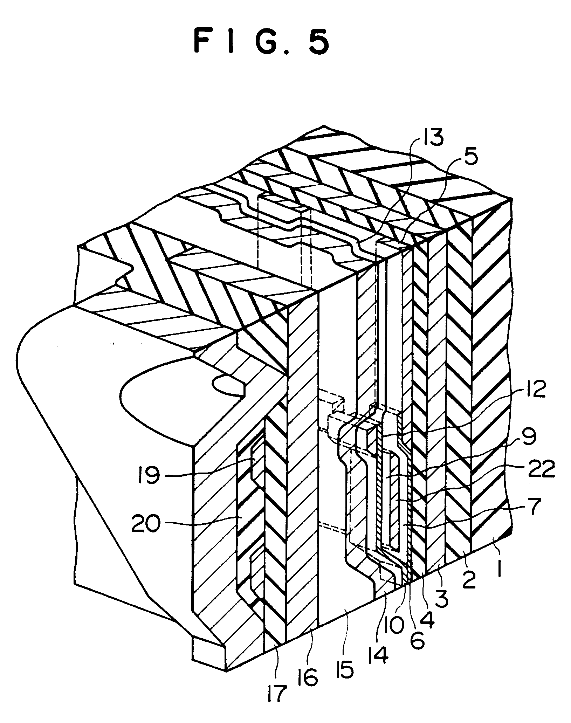

Now, a fourth embodiment is illustrated which is also characterized by a reproducing head section. FIG. 5 illustrates the head structure. Like the first embodiment, the reproducing section includes two MR films 6 and 10 which are connected in series to thereby provide an output comprising the sum of both the outputs from the MR films. Thus, electrode terminals are not provided on the medium facing surface of the MR films, but only at ends of the MR films on the opposite side of the head from its medium facing surface.

The head was fabricated as follows. Up to the first MR film were prepared using a process similar to that employed in the formation of the first embodiment, and subsequently, insulator layer 7 was formed. A 0.2-µm thick Co-Pt film was then deposited and processed to form a permanent magnet film pattern 22. As described later, the pattern was used to generate a bias magnetic field. Subsequently, a second MR film was formed via an insulator layer 9. Electrode 12 was then formed on an end of the MR film. Thereafter, like the formation of the first embodiment, insulator layer 13, and shield layer 14 were formed, and then a recording section was formed. After the formation of the head, a direct current magnetic field was applied to the head in a direction perpendicular to the width of the tracks for magnetizing as the permanent magnet.

As described above, since both the MR films were connected in series, the sense currents from the MR films had opposite directions, so that by the magnetic fields generated by both the currents both the MR films were magnetized in the direction where they traversed the tracks. The permanent magnet film 22 provided between both the films applies a bias magnetic field across each of the films in the same direction. Further, the signal magnetic field from a medium rotates the magnetization of the films in the same direction. Therefore, both the MR films exhibit the same change in resistance in response to the signal magnetic field applied thereto. Thus, the output from the electrodes 5 and 12 connected in series is twice as high as that in a single element. Thus, the particular embodiment provides a high output comprising the sum of both the outputs. The magnitude of the bias depends on the thickness of the permanent magnet and the magnitude of the sense current, so that an appropriate magnet thickness should be selected.

### Embodiment 5

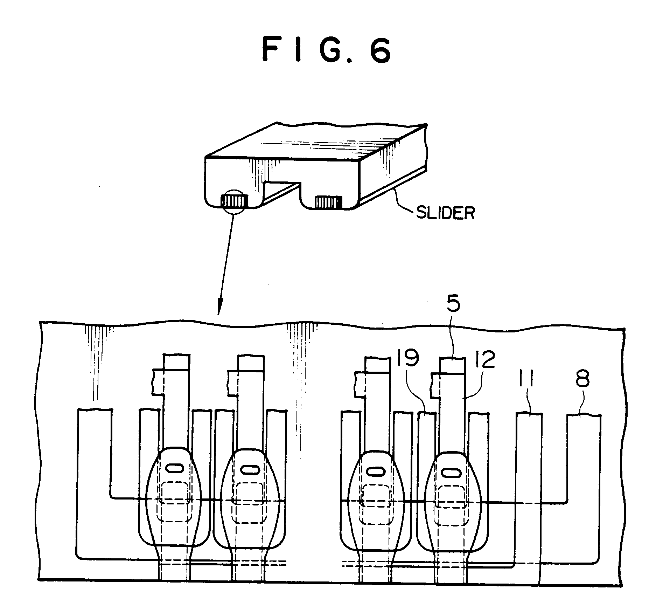

FIG. 6 schematically illustrates a fifth embodiment of a recording-reproducing apparatus which comprises a multi-track head device which includes a plurality of composite heads of recording-reproduction separating type provided on a single slider. The main mechanical portion of the recording-reproducing device includes a recording medium, the magnetic head, actuator and spindle motor and is connected to an interface for a computer via a read-write circuit for a multitrack, a positioning circuit and a power source control unit. Also in the particular embodiment, the linear recording density is 30 kb/cm (75 kBPI) (the bit length is 0.43 µm) and the track density is 1600 cm⁻¹ (4 kTPI) (the track width is 4 µm). A Co sputtered medium having a coercive force of 160 kA/m (2000 oersteds) or more is used for the recording medium. FIG. 6 is a perspective view of a multi-track magnetic head used and an enlarged plan view of the head portion. In the particular embodiment, a plurality of heads are formed on a rail on each side of the slider. The pitch of the head is required to be an integer times the track pitch in order to use the recroding medium surface effectively. In the particular embodiment, the pitch is twice the track pitch. In FIG. 6, electrode 11 for the MR film on the medium facing surface side and conductive pattern 8 formed between the two MR films are used in common. Electrodes 5, 12 for the MR films; recording magnetic poles 16, 21; and coil 19 on the opposite side of the disc from the medium facing surface are provided in each head.

In the particular embodiment, a recording density similar to that obtained by the first embodiment is realized. Since a plurality of data can be recorded and reproduced simultaneously, the data transfer rate is greatly improved.

### Embodiment 6

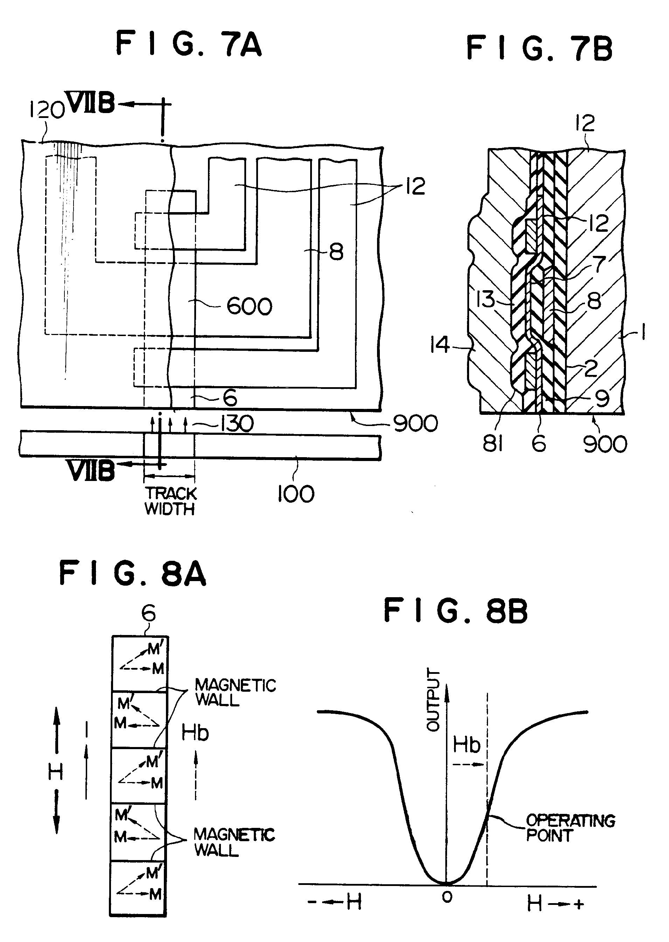

Another embodiment of the present invention will be illustrated in FIGs. 7a and 7b. A conventional magnetoresistive element includes a separate soft magnetic thin film are in a magnetic field active region of the element provided spaced from the medium facing surface in order to guide signal magnetic flux from a magnetic recording medium, as disclosed in Japanese Patent Publication JP-A-63-18506. In the conventional techniques disclosed in the JP-A-63-18506, an insulator layer is provided between the soft magnetic thin film for guide of the signal flux and the magnetic field active region of the magnetoresistive film, so that the magnetic resistance between these films increases to reduce a quantity of signal flux introduced in the magnetic field active region. Therefore, the signal reproducing efficiency of the magnetoresistive element is low disadvantageously.

In the particular embodiment, a magnetoresistive film itself extended to the recording medium facing surface and took a shape extending in the form of a strip from the medium facing surface. Current leads were then formed sequentially spaced from the medium facing surface.

FIG. 7a is a front view of a magnetoresistive element according to one embodiment of the present invention. FIG. 7b is a cross section view taken along the line A-A′ of FIG. 7a. An insulator layer 2 of Al₂O₃ or SiO₂ was deposited so as to be 0.1 - 0.4 µm, for example, using sputtering, on a substrate 1 which also functioned as a lower magnetic shield of a magnetic material such as ferrite (the substrate may include a soft magnetic thin film for the lower magnetic shield desposited on a non-magnetic material, for example, of ceramics via an insulator layer, for example, of Al₂O₃). A conductive film 8 of a good conductor such as Al, Cu, Nb or Ti was deposited on the insulator layer 2 using evaporation or sputtering to apply a bias magnetic field to a magnetic field active region 600 of magnetoresistive film 6. Then, patterning was effected so as to provide a predetermined shape using photolithography and dry or wet etching.

Magnetoresistive film 6, for example, of Ni-Fe alloy or Ni-Co alloy was deposited so as to be 10 - 100 nm thick using evaporation or sputtering via a 0.1 - 0.2 µm thick insulator layer 9 of the same material as insulator layer 2. Photolithography and dry etching were then used to provide a predetermined patterned shape. Magnetoresistive film 6 is equal in width to a track on magnetic recording medium 100 and has a length equal to three times the width of the track to reduce the influence of demagnetizing field.

The magnetic easy direction of magnetoresistive effect film 6 was selected so as to be the shorter-axis direction of the pattern. Signal sense current introducing leads 81, 12 of Al, Cu, Nb or Ti were sequentially formed spaced from recording medium facing surface 900 on magnetoresistive film 6. The distance from recording medium facing surface 900 to current guide lead 81 is required to be larger than the maximum quantity of abrasion produced when the magnetoresistive element is operated over magnetic recording medium 100. The spacing between current introducing leads 12 and 81 is required to be the track width or more in consideration of the output from the magnetoresistive element 120. It is preferable that the distance from the recording medium facing surface to current introducing lead 81 should be appropriately selected depending on a device using the particular embodiment. For example, if the particualr embodiment is used in a device such as a magnetic disc storage device where a quantity of abrasion is small, the distance is preferably 1 - 10 µm. In a device which uses a magnetic tape where the quantity of abrasion is large, the distance should be selected so as to increase the quantity of abrasion by +2 - 5 µm. In any event, the width of the magnetoresistive film is preferably small.

A magnetoresistive element 120 was prepared by depositing a 0.1 - 0.8-µm thick insulator film 13 of Al₂O₃ or SiO₂ and then a 0.3 - 3-µm thick soft magnetic thin film 14 of permalloy for the upper magnetic shield (or bonding a soft magnetic material of ferrite with an additive).

In the magnetoresistive element 120 of the particular embodiment, the signal flux 130 leaking out from magnetic recording medium 100 enters magnetoresistive film 6 exposed on the medium facing surface 900 to be led to magnetic field active region 600, which senses a change in the voltage corresponding to a change in the resistance of the magnetic field active region from the sense current introducing leads 12, 81 using the fact that the resistance of the magnetic active section 600 changes depending on the magnetoresistive effect by the signal flux introduced into the magnetic field active region. Thus, the signal indicative of records on the magnetic recording medium 100 is read. In this case, it is required that an appropriate current flow through conductive film 8 to apply an appropriate bias magnetic field to the magnetic field active region 600 of the effective film 6 such that the direction of the magnetization in the magnetic field active region has an angle of about 45 degrees to the direction of the sense current.

FIGs. 8a and 8b illustrate the operational principle of the magnetoresistive element 120. FIG. 8a illustrates the magnetization of magnetoresistive film 6 while FIG. 8b illustrates an external magnetic field 6 response curve on the output from magnetoresistive element 120. In magnetoresistive film 6 of the particular embodiment, several magnetic domains are formed in which the directions of magnetization M in adjacent magnetic domains are parallel, and perpendicular to the direction of current I, as shown in FIG. 8a. As shown in FIG. 8b, the external magnetic field response curve on the output from the element obtained when an alternating magnetic field H is applied to the element so as to be parallel to the direction of current I is such that when the external magnetic field H increases in any of the senses of + and - the output increases parabolically. However, under such conditions, even if + and - signal magnetic flux are applied, the output from the element only increases and the polarity does not change. Therefore, the signal cannot be read. If a bias magnetic field Hb is applied in the direction of FIG. 8a, the direction of magnetization in the magnetic domains is inclined in the direction of M′ so as to be at an angle to the direction of current I. Thus, as shown in FIG. 8b, the operating point in a null external magnetic field of the external magnetic field response curve shifts to thereby provide outputs of opposite polarities depending on +, - signal magnetic flux and hence to allow signal reading.

According to the particular embodiment, signal flux 130 is directly guided from mangetoresistive film 6 exposed on medium facing surface 900 to magnetic field active region 600. Furthermore, the influence of the demagnetizing field in the longer pattern axis of magnetoresistive film 6 is very small, so that the quantity of signal magnetic flux entering the medium facing surface 900 is guided without decrease due to leakage to the magnetic field active region 600. Thus, the output from the element 120 is enhanced compared to the conventional device.

### Embodiment 7

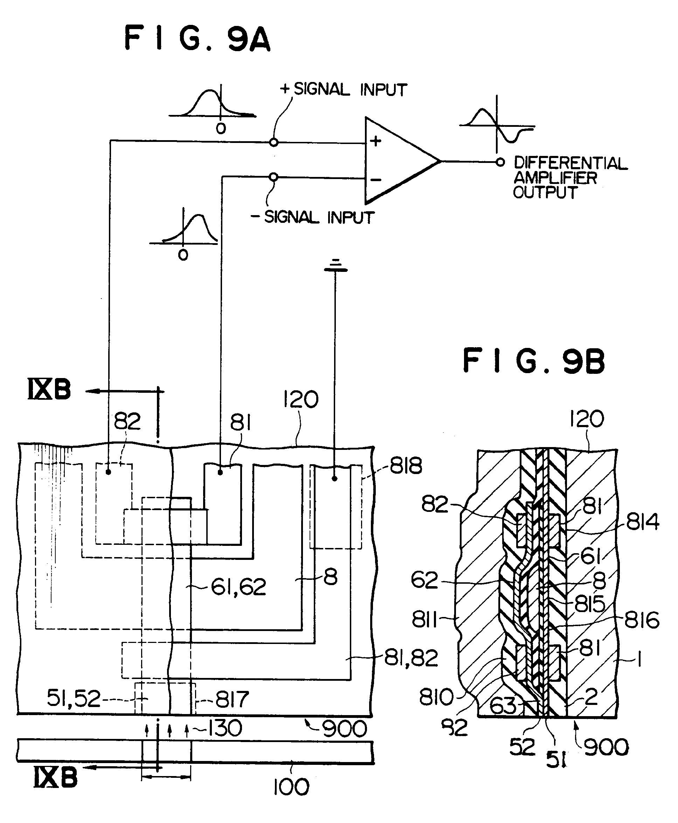

FIG. 9a is a front view of a magentoresistive element according to another embodiment of the present invention. FIG. 9b is a cross-sectional view taken along the line B-B′ of FIG. 9a. In the particular embodiment, like embodiment 6, a groove 14 was formed to provide sense current leads 81 in insulator layer 2 deposited on a substrate 1 using dry etching such as photolithography and ion milling. Current guide leads 81 of Al, Cu, Nb or Ti were then embedded in groove 814. Thereafter, magnetoresistive film 51 of Ni-Fe alloy or Ni-Co alloy was deposited so as to be 10 - 100 nm thick using evaporation or sputtering. Then, patterning was effected so as to provide a shape similar to that obtained in the embodiment 6 using similar processes. At this time, current lead 81 and magnetoresistive film 51 were put in contact with each other in a conductive state. Insulator layer 815 of the same material as insulator layer 2 was then deposited so as to be 0.05 - 0.2 µm thick. Conductive film 8 for application of bias magnetic field was prepared similarly to embodiment 6. At this time, the edges of conductive film 8 were inclined at an angle of 20 - 60 degrees to improve coverage. Furthermore, insulator layer 816 of the same material as insulator layers 2, 815 was deposited so as to be 0.05 - 0.2 µm thick. The second magnetoresistive film 52 was prepared so as to have the same thickness and shape as the first magnetoresistive film 51 using similar processes.

What is important is that before the second layer comprising magnetoresistive film 52 is deposited, a through hole 817 is provided in medium facing surface 900 and insulator layers 815 and 816 in the vicinity of the surface 900 and that second and first magnetoresistive films 52 and 51 are put into contact with each other on, or close to, medium facing surface 900. The magnetic-easy directions of the first and second magnetoresistive films are set so as to be the same. In this case, they may be parallel to either the shorter pattern axis or the longer pattern axis. Preferably, they are parallel to the shorter pattern axis.

Sense current leads 82 were provided on the second magnetoresistive film 52. In this case, through hole 818 was also provided in insulator layers 815 and 816 so as to short-circuit the medium facing surface side of the sense current guide lead 82 and the sense current leads 81 on the medium facing surface side underlying the first magnetoresistive film 51. While the upper and lower current leads on the medium facing surface side are short-circuited, the current leads on the opposite side of the head from the medium facing surface side may be short-circuited instead. The distance between the medium facing surface 900 and the current leads and the distance between the current leads are preferably equal for the upper and lower current leads 82 and 81, and similar to the distances for the current leads in embodiment 6 and should be set to an approriate value depending on a device using the particular embodiment as in the embodiment 6. The width of magnetoresistive films 51 and 52 are preferably small. Lastly, like embodiment 6, insulator layer 810 was deposited and upper magnetic shield layer 811 was formed to provide a magnetoresistive element 120.

A sdescribed above, the magnetoresistive element 120 of the particular embodiment is characterized in that instead of the single magnetoresistive film 6 of magnetoresistive element 120 of embodiment 6, two magnetoresistive films are used and that the upper and lower magnetoresistive films are put into contact with each other on the medium facing surface and in its vicinity. In the magnetoresistive element 120 of the particular embodiment, the magnetoresistive films 51 and 52 exposed on the medium facing surface 900 receive signal flux 130 simultaneously and guides it to the magnetic field active regions 61 and 62 on the upper and lower magnetoresistive films. Since the upper and lower magnetoresistive films 51 and 52 are of the same material, thickness and shape, signal magnetic flux diverges substantially equally at point 63 to enter the magnetic field active regions 61 and 62 where the fact that the resistance value of each of the magnetic field active regions 61 and 62 fluctuates due magnetoresistive effect in response to the signal flux is used to detect a change in the voltage corresponding to a change in the resistance from current leads 81 and 82, and further that the output voltages from the respective leads are amplified differentially to read a signal indicative of records on the magnetic recording medium 100. FIG. 9a illustrates the diferential amplifier which receives output voltages at signal input terminals + and - thereof from current leads 81 and 82 and provides the output signal as the differential amplification of the output voltages from the signal output terminals. Changes in the resistance values of the magnetic field active regions 61 and 62 are equal because, as mentioned above, the same quantity of signal flux enters each of the magnetic field active regions 61 and 62, so that changes in the voltages detected by current leads 81 and 82 are equal in correspondence to changes in the respective resistance values of magnetic field active regions 61 and 62. The signal flux entering simutlaneously from the medium facing surface 900 to magnetoresistive films 51 and 52 arrive simultaneously at magnetic field active regions 61 and 62. Therefore, the phases of changes in the respective voltages detected by current lead 81 and 82 are the same and no phase difference will occur.

When the output voltage is detected, an appropriate current is caused to flow through the conductive film 8 for applciation of a bias magnetic field as in embodiment 6. Furthermore, it is necessary to apply an appropriate bias magnetic field to the magnetic field active regions 61 and 62 of the magnetoresistive films 51 and 52 such that the directions of magnetization in the magnetic field active regions are at an angle of about 45 degrees to the direction of flow of the sense current.

As shown in FIG. 9b, by placing conductive film 8 between upper and lower magnetoresistive films, the direction of the bias magnet field is opposite to each of the upper and lower magnetoresistive films to thereby permit to amplify the respective output voltages differentially. Even if conductive film 8 is not provided between the magnetoresistive films, one conductive film 8 may be provided for applying a bias magnetic field to each of the magnetoresistive films.

While in the particular embodiment the current biasing method is employed, any other biasing method may be used. The operational principles of the particular embodiment are similar to those of embodiment 6.

As described above, according to the particular embodiment, the same quantity of signal magnetic flux is guided to each of the magnetic field active regions of the upper and lower magnetoresistive films simultaneously, in addition to effects similar to those of embodiment 6, mentioned above. Therefore, even if the output voltages from the magnetic field active regions are amplified differentially, the resulting differentially amplified waveform is not distorted and high output is provided.

### Embodiment 8

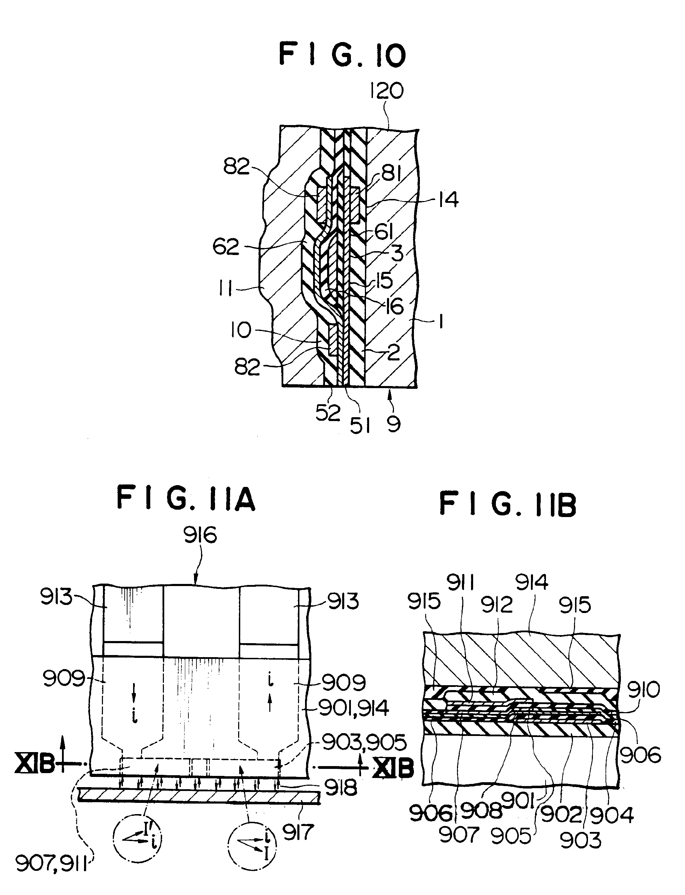

FIG. 10 is a cross sectional view of a magnetoresistive element according to a further embodiment of the present invention in which a single common current lead replaces the upper and lower current leads, either on the medium facing surface 900 side or on its opposite side, of sense current guide leads 81 and 82 formed on the upper and lower magnetoresistive films 51 and 52 in the magnetoresistive element 120 of embodiment 7.

FIG. 11 illustrates the use of a common current lead on the medium facing surface 900 side. The other remaining structure is quite the same as that of embodiment 7 and the operation and advantages of the particular embodiment are similar to those of embodiment 7.

According to the particular embodiment, the signal flux leading out from a magnetic recording medium can be guided to the magnetic field active regions of the magnetoresistive element without being reduced, so that the output from the magnetoresistive element is enhanced. Further, the same quantity of signal magnetic flux can be guided simultaneously to each of the magnetic field active regions of the two-layered magnetoresistive element so that when the output voltages from the magnetic field active regions are amplified differentially, the resulting differentially amplified waveform is not distorted. Therefore, a magnetoresistive element of higher output is provided. According to the particular embodiment, since the magnetoresistive films extend in the form of a strip from the medium facing surface, the output does not greatly decrease even if the track width becomes very narrow. Therefore, the effect produced by the present invention is more greatly exhibited as the track width becomes narrower.

### Embodiment 9

Another embodiment of the present invention will now be described below.

As disclosed in Japanese Patent Publication JP-A-50-65213, a conventional magnetoresistive element using a soft magnetic film as bias magnetic field applying means includes two conductors, one on each end of a magnetoresistive film. The output from the magnetoresistive element exhibits a parabolic output in response to external magnetic field applied to the element. Japanese Patent Publication JP-A-61-199684 proposes a bias type magnetoresistive element which is intended to expand its dynamic range and to reduce noise, and which uses a soft magnetic thin film where the two parabolic magnetoresistive element outputs disclosed in the Publication ′213 are amplfiied differentially. The magnetoresistive element includes three conducors; a common conductor at the center of the magnetoresistive film thereof for differentiating purposes and two further conductors, one provided on each end of the magnetoresistive film.

It is also necessary to reduce the width of the recording track in accordance with the requirement for an increase in the magnetic recording density. The magnetoresistive element disclosed in the Publication ′213 is advantageous for a magnetic recording medium having narrow tracks because the two conductors are used, but it provides a parabolic output, so that the dynamic range is narrow disadvantageously. On the other hand, while in the magnetoresistive element of the differential type disclosed in the Publication ′684 the dynamic range is wide advantageously, it is very difficult to prepare a magnetoresistive element having three conductors and dealing with narrowing tracks in the magnetic recording medium.

It is an object of the particular embodiment to provide a wide-dynamic range magnetoresistive element which solves the just mentioned problems with the conventional techniques and which provides a differential output using only two conductors, and to provide a magnetic recording-reproducing device using the magnetoresistive element.

In order to achieve the above object, a magnetoresistive film structure used in the magnetoresistive element includes series connected magnetoresistive films having a positive and a negative Δρ effect in response to magnetic field applied thereto, both the positive and negative Δρ effects being the same in magnitude, and two conductors connecting both ends of the joined films. In order to apply opposite bias magnetic fields to the series connected magnetoresistive films bias applying means such as soft magnetic films are provided in contact with, or close to, the respective magnetoresistive films in facing relationship on the opposite positions in substantially the same configuration as the magnetoresistive films.

If there are no bias applying means and no bias magnetic fields are applied to the magnetoresistive films having the positive and negative Δρ effects in substantially the same in magnitude, both the directions of magnetization in both the magnetoresistive films are the same and coincide with the directions of sensed currents from the conductors provided at both the ends of the films. Under such conditions, if signal magnetic flux is applied from the magnetic recording medium to the magnetoresistive films, the magnetoresistive film having the positive Δρ effect exhibits a resistance which reduces in a parabolic curve with the maximum value being when the magnetic flux is zero while the magnetoresistive film having the negative Δρ effect exhibits a resistance which increases in a parabolic curve with the minimum value being when the magnetic flux is zero. Eventually, a change in the resistance of the whole magnetoresistive film which comprises the series junction of the magnetoresistive effect films exhibits the sum of substantially equal changes in the resistances of the films, so that those changes in the resistances cannot be viewed virtually. Namely, series connection of the magnetoresistive effect films having neagative and postiive Δρ effects serves to produce an effect similar to taking the difference between changes in the resistances of two mangetoresistive films having a positive Δρ effect.

By providing bias magnetic field applying means such as soft magnetic films at opposite positions relative to the magnetoresistive films of positive and negative Δρ effects in contact with, or close to, the magnetoresistive films, bias magnetic fields of opposite directions produced by the interaction of the magnetic field generated by the sense current and the soft magnetic films to which the bias magnetic field is applied are applied to the magnetoresistive films. The bias magnetic fields of opposite directions act such that both the resistance values of the films having positive and negative Δρ effects increase of decrease relative to a bias point present when the magnetic field is zero. As a result, the whole resistance value of the magnetoresistive films joined in series exhibits a change similar to that in the resistance value obtained when magnetoresistive films having two positive Δρ effects to which bias magnetic fields opposite to the signal magnetic field in the magnetic recording medium are applied are operated differentially.

FIG. 11a is a plan view of a magnetoresistive element of the particular embodiment. FIG. 11b is a cross-sectional view taken along the line XIB-XIB of FIG. 11a. In the particular embodiment, insulator layer 902 of Al₂O₃ or SiO₂ was deposited so as to be 0.05 - 0.5 µm thick on substrate 901 of a soft magnetic material and also functioning as a magnetic shield. First soft magnetic film 903 was deposited so as to be 40 - 200 nm thick on the insulator using vacuum evaporation or sputtering. Photolithography was used to pattern the first soft magnetic film in a predetermined shape. The shape of first soft magnetic film 903 is preferably the same as that of magnetoresistive film 905 having positive Δρ effect to be deposited subsequently. After the formation of soft magnetic film 903, insulator layer 904 of Al₂O₃ or SiO₂ was deposited so as to be 0.05 - 0.2 µm thick, and a magnetoresistive film 905 having a positive Δρ effect was deposited so as to 10 - 200 nm thick using vacuum evaporation or sputtering. Thereafter, photolithography was used to provide a pattern of predetermined configuration for film 905. Subsequently, insulator layer 906 was deposited so as to be 0.05 - 0.1 µm thick using sputtering and photolithography was used to form a through hole 908. Then, a magnetoresistive film 907 having negative Δρ effect was joined in series with magnetoresistive film 905 having positive Δρ effect and the same thickness and shape as film 907. Magnetoresistive film 905 having positive effect may be made, for example, of Ni-Fe alloy, or one of other alloy materials having magnetotesistive effect of positive Δρ effect such as Ni-Co alloy. Magnetoresistive film 907 having negative Δρ effect may be Ni-Fe-Ir alloy or one of other alloy materials having negative Δρ effect. In order to obtain an output waveform symmetrical with the output waveform from a magnetoresistive film having a positive Δρ effect, the negative Δρ effect should be substantially the same in magnitude as the positive Δρ effect, and anisotropic magnetic field in consideration of shape anisotropy should be substantially the same as in the magnetoresistive films having positive and negative Δρ effects. In the particular embodiment, when magnetoresistive films 905 and 907 having positive and negative Δρ effects are patterned, conductors 909 was prepared at ends of the films in patterning to cause sense currents to flow therethrough.

Insulator layer 910 was then deposited so as to be 0.05 - 0.2 µm thick like insulator film 904. Second soft magnetic film 911 which comprised bias applying means was formed so as to be 40 - 200 nm thick on magnetoresistive film 907 having a negative effect in superimposing relationship in substantially the same shape as film 907. Insulator protective layer 912 of Al₂O₃ or SiO₂ was deposited so as to be 0.05 - 0.5 µm thick for forming a protective layer and a magnetic gap. Sense current introducing pad 913 was formed on condctive layer 909 by forming a through hole 908 and depositing a good conductor, for example, of Cu. Lastly, soft magnetic layer 914 for magnetic shielding was bonded with adhesive 915 to provide a magnetoresistive element 916.

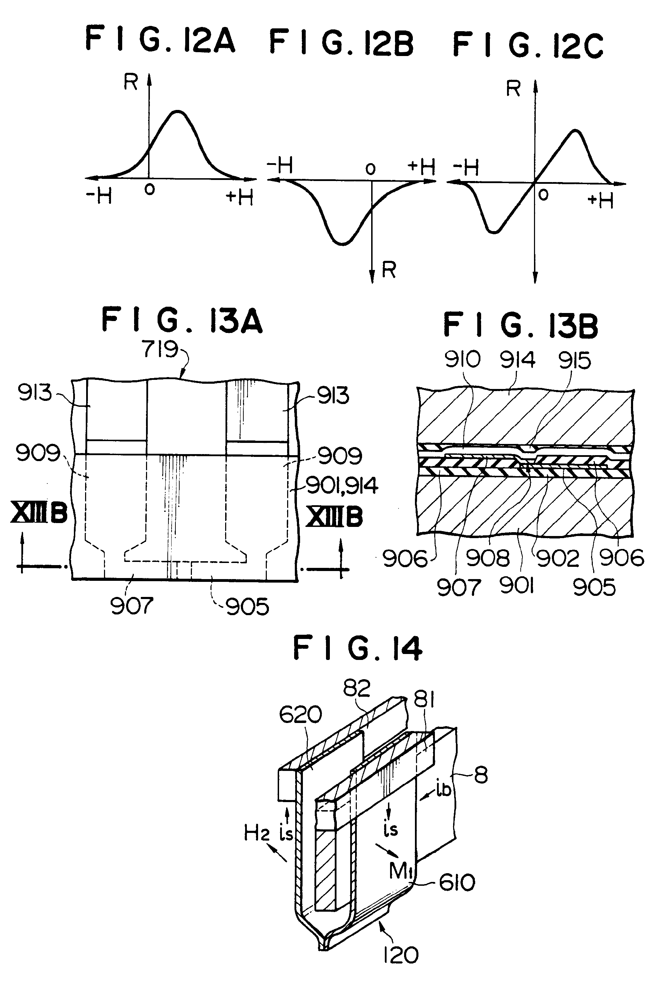

The operation of the magnetoresistive effect 916 will now be described. First, a sense current i is caused to flow through magnetoresistive films 905 and 907 having positive and negative Δρ effects through pad 913 and conductor 909. By the interaction of a magnetic field produced by the sense current i and first and second soft magnetic films 903 and 911 for bias application, the magnetoresistive films 905 and 907 are impressed with opposite bias magnetic fields. As a result, the directions of magnetization of both the magnetoresistive films, as shown by I and I′, are at opposite angles ϑ to the direction of current i flow (the directions of the magnetization of the magnetoresistive films are parallel to the flow of current i in the absence of the bias magnetic field). If the signal magnetic field 918 is applied from magnetic recording medium 917 under such conditions, the resistance R of magnetoresistive film 905 producing positive Δρ effect changes as shown by the curve of FIG. 12a with signal magnetic field H (shown in FIG. 13a using the saturated signal magnetic field as a reference, which applies to similar curves to be illustrated later). As shown by a curve in FIG. 12b, the resistance R of magnetoresistive film 907 adjusted to produce negative Δρ effect substantially equal in magnitude to the positive Δρ effect and substantially the same anisotropic magnetic field changes in quite 180 degree-symmetrical relationship to that of magnetoresistive film 905 producing a positive Δρ effect. Eventually, a change in the resistance value R of the whole magnetoresistive film which comprises the series connected magnetoresistive films and read from conductor 909 and pad 913 is shown by a curve in FIG. 12c where the waveform for the positive signal magnetic field H and the waveform for the negative signal magnetic field H are symmetrical with reference to the origin, so that the positive and negative signal magnetic fields H written into the medium can be detected as an output waveform corresponding to the curve configuration of FIG. 12c.

The output waveform shown in FIG. 12c and obtained by the magnetoresistive element 916 of the particular embodiment is substantially the same as the waveform obtained by the magnetoresistive element where a conventional magnetoresistive film producing a positive Δρ effect is differentially operated. Therefore, as shown in the particular embodiment, the use of only two conductors 909 produces effects due to differential operation similar to that obtained with the conventional device. More particularly, the dynamic range of signal magnetic field H is expanded and noise is reduced. Since the use of only two conductors 909 is required, the magnetoresistive element 916 of the particular embodiment adjusts to narrowing tracks.

While in the particular embodiment the soft magnetic film was illustrated as being used as the bias applying means, an shunt film or a current lead or a permanent magnet may be used as the bias applying means to provide similar effects.

While in the particular embodiment, the use of a soft magnetic bulk material is illustrated for magnetic shielding, a soft magnetic film may be used instead to provide similar effects.

### Embodiment 10

FIG. 13a is a plan view of a magnetoresistive-element of the particular embodiment. FIG. 13b is a cross-sectional view taken along the line XIIIB-XIIIB of FIG. 13a. In the particular embodiment, instead of first and second soft magnetic films 903 and 911 which comprise bias applying means for the magnetoresistive element 916 of embodiment 9, magnetoresistive film 905 producing a positive Δρ effect is provided close to soft magnetic substrate 1 which functions also as a magnetic shield, while a magnetoresistive film 907 producing a negative Δρ effect is provided close to the other soft magnetic film 914 for magnetic shielding such that opposite bias magnetic fields are applied to films 905 and 907 by the interaction of the magnetic field produced by current i and soft magnetic films 901 and 914. Therefore, according to the process for forming magnetoresistive element 919 of the particular embodiment, the steps for forming first and second soft magnetic films 903 and 911 and insulator layers 904 and 910 in the process for manufacturing magnetoresistive element 916 of the particular embodiment 1 are omitted, so that the process for manufacturing the element is very simplified advantageously. The thickness of insulator layer 906 deposited on mangetoresistive effect film 5 producing positive Δρ effect is required to be larger than the thickness of magnetoresistive effect film 905 producing positive Δρ effect, and preferably is two or three times the thickness of film 905. The other steps of the process for manufacturing the device were similar to those of embodiment 9 in order to provide magnetoresistive element 919. The examination of the characteristics of element 919 exhibited that the device was substantially the same in function, operation and effect as element 916 of embodiment 9.

Also in the particular embodiment, a soft magnetic film may be used instead of the soft magnetic material for magnetic shielding to provide similar performances.

### Embodiment 11

FIG. 14 is a perspective view of a magnetoresistive element of a further embodiment of the present invention. The magnetoresistive element shown in FIG. 14 may be produced using a thin film preparing process, preparing steps and photolithography similar to those used in the formation of the above embodiments. In the particular embodiment, magnetoresistive films 610 and 620 producing positive and negative Δρ effects were used, current leads 81 and 82 to introduce the sense current were provided on the medium facing surface and opposite surface of magnetoresistive films 610 and 620, respectively. Current lead 8 was provided via an insulator layer between films 610 and 620 for magnetizing direction control of the magnetoresistive films. Films 610, 620 and current leads 81, 82 and 8 are similar in shape and size to those of the above embodiments.

In the resulting magnetoresistive element 120, a sense current iₛ is caused to flow via currents lead 81, 82 in one direction, a current i_{b} of an appropriate intensity for bias magnetic field application is caused to flow through current lead 8 to magnetize films 610 and 620 in opposite directions such that the directions of magnetization M₁ and M₂ of films 610 and 620 are at an angle of about 45 degrees to the direction of sense current iₛ to thereby read the signal magnetic field out of the medium. If the signal magnetic field from the medium diverges to enter films 610 and 620, the resistance of films 610 and 620 increase and decrease similarly because the Δρ effect of both the films are equal in magnitude and opposite in sign. As a result, the output voltages from current leads 81, 82 correspond to the sum of changes in the resistance value of the films. Since the output voltage waveform obtained due to different signs of the Δρ effects is just similar to that obtained when magnetoresistive films producing positive Δρ effect are differentially operated, and produced effects are similar to those obtained by differential operation. Thus, since only two sense current introducing leads are provided in the particular embodiment, the process for preparing a device which produces similar effects is greatly simplified advantageously. The magnetoresistive element 120 of the particular embodiment produces quite similar effects produced by the above embodiments.

As described above, according to the present invention, since the ends of the two MR elements facing a medium are electrically and magnetically connected, the differential output is provided without any distortion in the output waveform even if the recording density is high. Since the signal magnetic field diverges so as to provide the differential output from the two MR films. Thus, a satisfactory S/N ratio is provided even if a decrease in the output occurs due to provision of narrow tracks, and a magnetic recording-reproducing device having a face recording density of 300 Mb/in² or more is realized.

As described in detail above, in the magnetoresistive element according to the present invention, the magnetoresistive films producing positive and negative Δρ effects are joined in series and two conductors are formed at the ends of the joined films to produce differential effects similar to those produced by the conventional differential magnetoresistive effect element having three conductors. Therefore, high density recording and reproduction is realized, and expansion of the dynamic range and reduction of noise are achieved advantageously irrespective of the use of narrowing tracks.

## Claims

1. A magnetic head for a magnetic recording apparatus, including
a pair of magnetoresistive strips (6, 10) which are electrically and magnetically interconnected at their front ends located at the surface of the head (101) facing the recording medium (100) and are separated at their ends remote from the recording medium,
a pair of electrodes (5, 12) connecting the remote ends of the magnetoresistive strips (6, 10) to means adapted to cause a sensing current to flow through said strips, and
means for amplifying the difference between the output signals derived from said electrodes (5, 12),
**characterised** in that said strips are formed by a pair of magnetoresistive films (6, 10) superimposed so as to contact each other at their front ends and being separated by an interposed insulating layer (7) except at their front ends.

2. The magnetic head of claim 1, wherein said magnetoresistive films (61, 101) are disposed between a pair of soft-magnetic films (62, 102) via insulating layers (41, 131).

3. The magnetic head of claim 1 or 2, wherein said magnetoresistive films (6, 10) are disposed between a pair of shielding layers (3, 14).

4. The magnetic head of claim 3, wherein the spacing between said shielding layers (3, 14) is smaller in the vicinity of the surface of the head (101) facing the recording medium (100) than at portions remote from said recording medium.

5. The magnetic head of any one of claims 1 to 4, wherein a common electrode (11) is connected to the front ends of said magnetoresistive strips (6, 10).

6. The magnetic head of any one of claims 1 to 5, including a conductor (8) provided between said magnetoresistive films (6, 10) for controlling the direction in which they are magnetised.

7. The magnetic head of claim 6, wherein the spacing between said conductor (8) and the surface of the head (101) facing the recording medium (100) is at least 10 µm.

8. The magnetic head of any one of claims 1 to 5, including a permanent magnet film (22) interposed between said magnetoresistive films (6, 10).

9. The magnetic head of any one of claims 1 to 8, wherein the magnetoresistive films (6, 10) have a thickness of 10 to 100 nm, and a width at the surface of the head (101) facing the recording medium (100) of 10 µm or less.

## Patentansprüche

1. Magnetkopf für ein magnetisches Aufzeichnungsgerät, umfassend
ein Paar von magnetoresistiven Streifen (6, 10), die an ihren vorderen Enden an der dem Aufzeichnungsmedium (100) zugewandten Fläche des Kopfes (101) elektrisch und magnetisch miteinander verbunden und an ihren von dem Aufzeichnungsmedium abgewandten Enden voneinander getrennt sind,
ein Paar von Elektroden (5, 12), die die abgewandten Enden der magnetoresistiven Streifen (6, 10) mit einer Einrichtung verbinden, die bewirkt, daß sie von einem Meßstrom durchsetzt werden, und
eine Einrichtung zur Verstärkung der Differenz zwischen den von den Elektroden (5, 12) abgeleiteten Ausgangssignalen,
dadurch **gekennzeichnet**, daß die Streifen von einem Paar von magnetoresistiven Filmen (6, 10) gebildet sind, die derart übereinander angeordnet sind, daß sie sich an ihren vorderen Enden berühren und mit Ausnahme ihrer vorderen Enden durch eine dazwischenliegende Isolierschicht (7) voneinander getrennt sind.

2. Magnetkopf nach Anspruch 1, wobei die magnetoresistiven Filme (61, 101) über Isolierschichten (41, 131) zwischen einem Paar von weichmagnetischen Filmen (62, 102) angeordnet sind.

3. Magnetkopf nach Anspruch 1 oder 2, wobei die magnetoresistiven Filme (6, 10) zwischen einem Paar von Abschirmschichten (3, 14) angeordnet sind.

4. Magnetkopf nach Anspruch 3, wobei der Abstand zwischen den Abschirmschichten (3, 14) in der Nähe der dem Aufzeichnungsmedium (100) zugewandten Fläche des Kopfes (101) kleiner ist als an von dem Aufzeichnungsmedium abgewandten Teilen.

5. Magnetkopf nach einem der Ansprüche 1 bis 4, wobei an die vorderen Enden der magnetoresistiven Streifen (6, 10) eine gemeinsame Elektrode (11) angeschlossen ist.

6. Magnetkopf nach einem der Ansprüche 1 bis 5 mit einem zwischen den magnetoresistiven Filmen (6, 10) angeordneten Leiter (8) zur Steuerung der Richtung ihrer Magnetisierung.

7. Magnetkopf nach Anspruch 6, wobei der Abstand zwischen dem Leiter (8) und der dem Aufzeichnungsmedium (100) zugewandten Fläche des Kopfes (101) mindestens 10 µm beträgt.

8. Magnetkopf nach einem der Ansprüche 1 bis 5 mit einem zwischen den magnetoresistiven Filmen (6, 10) angeordneten Dauermagnetfilm (22).

9. Magnetkopf nach einem der Ansprüche 1 bis 8, wobei die magnetoresistiven Filme (6, 10) eine Dicke von 10 bis 100 nm und an der dem Aufzeichnungsmedium (100) zugewandten Fläche des Kopfes (101) eine Breite von 10 µm oder weniger aufweisen.

## Revendications

1. Tête magnétique pour un dispositif d'enregistrement magnétique, comprenant
un couple de bandes magnétorésistives (6,10), qui sont interconnectées électriquement et magnétiquement, par leurs extrémités avant situées au niveau de la surface de la tête (101) en regard du support d'enregistrement (100) et sont séparées, au niveau de leurs extrémités distantes du support d'enregistrement,
un couple d'électrodes (5,12) qui raccordent les extrémités distantes des bandes magnétorésistives (6,10) à des moyens aptes à faire circuler un courant de détection dans lesdites bandes, et
des moyens pour amplifier la différence entre les signaux de sortie délivrés par lesdites électrodes (5,12),
caractérisée en ce que lesdites bandes sont formées par un couple de pellicules magnétorésistives (6, 10) superposées de manière à être en contact réciproque au niveau de leurs extrémités avant et séparées par une couche isolante intercalaire (7) hormis au niveau de leurs extrémités avant.

2. Tête magnétique selon la revendication 1, dans laquelle lesdites pellicules magnétorésistives (61,101) sont disposées entre un couple de pellicules en matériau magnétique doux (62,102) moyennant l'interposition de couches isolantes (41,131).

3. Tête magnétique selon la revendication 1 ou 2, dans laquelle lesdites pellicules magnétorésistives (6,10) sont disposées entre un couple de couches de blindage (3, 14).

4. Tête magnétique selon la revendication 3, dans laquelle l'espacement entre lesdites couches de blindage (3,14) est plus faible au voisinage de la surface de la tête (101) en regard du support d'enregistrement (100) qu'au niveau de parties éloignées dudit support d'enregistrement.

5. Tête magnétique selon l'une quelconque des revendications 1 à 4, dans laquelle une électrode commune (11) est raccordée aux extrémités avant desdites bandes magnétorésistives (6,10).

6. Tête magnétique selon l'une quelconque des revendications 1 à 5, comprenant un conducteur (8) prévu entre lesdites pellicules magnétorésistives (6,10) pour la commande de la direction dans laquelle elles sont aimantées.

7. Tête magnétique selon la revendication 6, dans laquelle l'espace entre ledit conducteur (8) et la surface de la tête (101) en regard du support d'enregistrement (100) est d'au moins 10 µm.

8. Tête magnétique selon l'une quelconque des revendications 1 à 5, comprenant une pellicule d'aimant permanent (22) intercalée entre lesdites pellicules magnétorésistives (6,10).

9. Tête magnétique selon l'une quelconque des revendications 1 à 8, dans laquelle les pellicules magnétorésistives (6,10) possèdent une épaisseur de 10 à 100 nm, et une largeur de 10 µm ou moins au niveau de la surface de la tête (101) en regard du support d'enregistrement (100).
